# DEMANDE DE BREVET EUROPEEN

(11) **EP 0 791 758 A1**
(43) Date de publication de la demande: **27.08.1997**
(21) Numéro de dépôt: 97400413.7
(22) Date de dépôt: 25.02.1997
(51) Int. Cl.: F16B 21/04, F16B 7/20, F16D 1/108

(54) **Attache rapide de type à baionette**

(30) Priorité: 26.02.1996 FR 9602357
(71) Demandeur: ECIA - EQUIPEMENTS ET COMPOSANTS POUR L'INDUSTRIE AUTOMOBILE, F-25400 Audincourt (FR)
(72) Inventeur: Mouhot, Frédéric, 25420 Voujeaucourt (FR)
(74) Mandataire: Habasque, Etienne Joel Jean-François

(57) **Abrégé**

Cette attache, pour le raccordement de deux organes de direction notamment de véhicule automobile, dont l'un comporte une douille (2) munie d'au moins une fente (7,8) de réception d'une partie en saillie latérale (5,6) d'une queue (3) de l'autre organe, et comportant des moyens (4) de verrouillage en position de la partie en saillie latérale de la queue dans la fente de la douille, est caractérisée en ce qu'au moins l'un des bords de la douille (2) délimitant la fente, comporte des moyens de butée (9,10) délimitant au moins une position de verrouillage de la partie en saillie latérale et en ce que les moyens de verrouillage (4) comportent des moyens (13,14) en forme de coin, déplaçables dans la fente, entre une position de verrouillage dans laquelle ces moyens en forme de coin empêchent la partie en saillie latérale de la queue de se dégager des moyens de butée de la fente de la douille et une position escamotée.

## Description

La présente invention concerne une attache rapide de type à baïonnette pour le raccordement de deux organes de direction notamment de véhicule automobile.

Plus particulièrement, l'invention concerne une attache rapide pour le raccordement de deux organes dont l'un comporte une douille munie d'au moins une fente de réception d'une partie en saillie latérale d'une queue de l'autre organe, l'attache comportant des moyens de verrouillage en position de la partie en saillie latérale de la queue dans la fente de la douille.

On connaît déjà dans l'état de la technique, notamment du document FR-A-2 628 488 au nom de la Demanderesse, une attache rapide de ce type dans laquelle la douille comporte au moins une fente hélicoïdale et porte un organe de guidage et de verrouillage repoussant élastiquement la partie en saillie latérale de la queue dans le fond de la fente hélicoïdale de manière à la verrouiller dans cette position.

Par ailleurs, des cannelures sont prévues entre la douille et l'organe de guidage et de verrouillage pour permettre un déplacement axial de cet organe par rapport à cette douille, tout en empêchant cet organe de se déplacer angulairement autour de la douille, afin d'assurer un verrouillage correct en position de la queue dans cette douille.

On conçoit cependant que la structure d'une telle attache est relativement complexe et coûteuse à réaliser.

Le but de l'invention est donc de résoudre ces problèmes.

A cet effet, l'invention a pour objet une attache rapide de type à baïonnette, pour le raccordement de deux organes de direction notamment de véhicule automobile, dont l'un comporte une douille munie d'au moins une fente de réception d'une partie en saillie latérale d'une queue de l'autre organe, l'attache comportant des moyens de verrouillage en position de la partie en saillie latérale de la queue dans la fente de la douille, caractérisée en ce qu'au moins l'un des bords de la douille délimitant la fente, comporte des moyens de butée délimitant au moins une position de verrouillage de la partie en saillie latérale et en ce que les moyens de verrouillage comportent des moyens en forme de coin déplaçables dans la fente, entre une première position de verrouillage dans laquelle ces moyens en forme de coin empêchent la partie en saillie latérale de la queue de se dégager des moyens de butée de la fente de la douille et une seconde position escamotée.

L'invention sera mieux comprise à la lecture de la description qui va suivre, donnée uniquement à titre d'exemple et faite en se référant aux dessins annexés, sur lesquels :

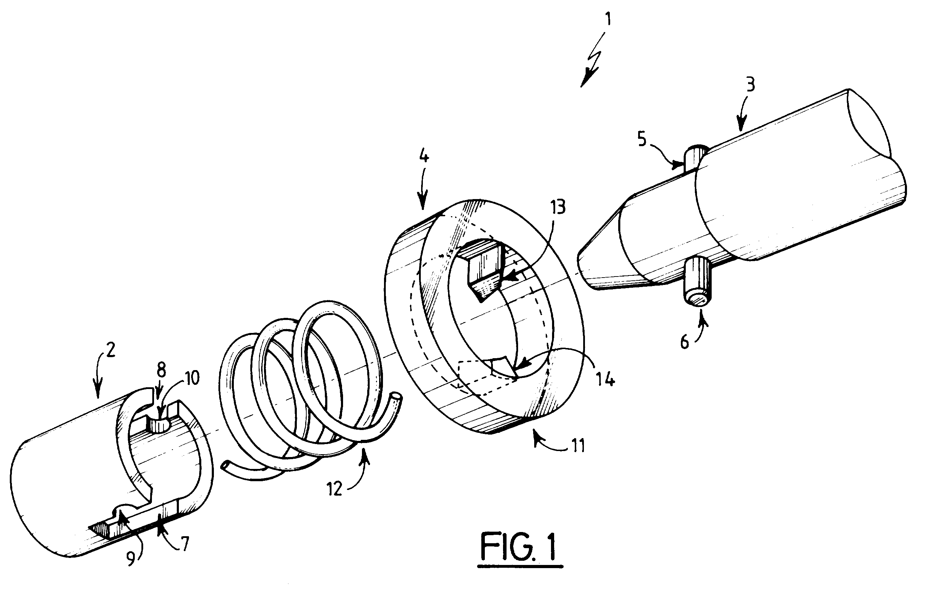

- la Fig.1 représente une vue en perspective éclatée d'une attache rapide selon l'invention; et
- les Figs. 2 et 3 illustrent le fonctionnement de cette attache rapide.

On reconnaît en effet sur ces figures, une attache rapide de type à baïonnette, désignée par la référence générale 1.

Cette attache rapide permet le raccordement de deux organes de direction notamment de véhicule automobile, dont l'un comporte une douille 2 munie d'au moins une fente de réception d'une partie en saillie latérale correspondante d'une queue 3 de l'autre organe.

Par ailleurs, l'attache rapide comporte également des moyens 4 de verrouillage en position de la partie en saillie latérale de la queue 3 dans la fente de la douille 2, pour le raccordement de la queue et de la douille.

Dans l'exemple de réalisation représenté sur ces figures, la queue 3 comporte deux parties en saillie latérale diamétralement opposées, 5 et 6, constituées par exemple par les extrémités d'une tige traversant cette queue.

Ces parties en saillie latérale sont adaptées pour s'engager dans deux fentes correspondantes 7,8 de la douille 2.

Dans l'exemple de réalisation représenté sur ces figures, ces fentes de la douille sont des fentes axiales et au moins l'un des bords de la douille 2 délimitant chaque fente, comporte des moyens de butée délimitant au moins une position de verrouillage de la partie en saillie latérale correspondante de la queue dans cette douille.

Dans l'exemple de réalisation représenté, ces moyens de butée sont formés par exemple par un décrochement latéral 9 et 10 respectivement de chaque bord correspondant de la douille.

Les moyens de verrouillage 4 comprennent quant à eux des moyens en forme de coin déplaçables dans la ou chaque fente correspondante de la douille entre une première position de verrouillage, dans laquelle ces moyens en forme de coin empêchent la partie en saillie latérale correspondante de la queue de se dégager des moyens de butée de la fente correspondante de la douille et une seconde position escamotée, comme cela sera décrit plus en détail par la suite.

En fait, ces moyens de verrouillage 4 peuvent par exemple comporter une bague disposée par exemple autour de la douille et désignée par la référence générale 11 sur ces figures, cette bague étant associée à des moyens élastiques tels qu'un ressort hélicoïdal 12, la sollicitant par exemple axialement vers sa position de verrouillage, tandis que les moyens en forme de coin décrits précédemment, comprennent des parties en saillie radiale vers l'intérieur de cette bague, désignées par les références 13 et 14 sur ces figures, ces parties en saillie radiale vers l'intérieur de la bague s'étendant dans les fentes de la douille.

Des moyens classiques (non représentés) de maintien de la bague sur la douille sont également prévus pour limiter sa course axiale de déplacement vers l'extrémité avant de celle-ci adaptée pour recevoir la queue.

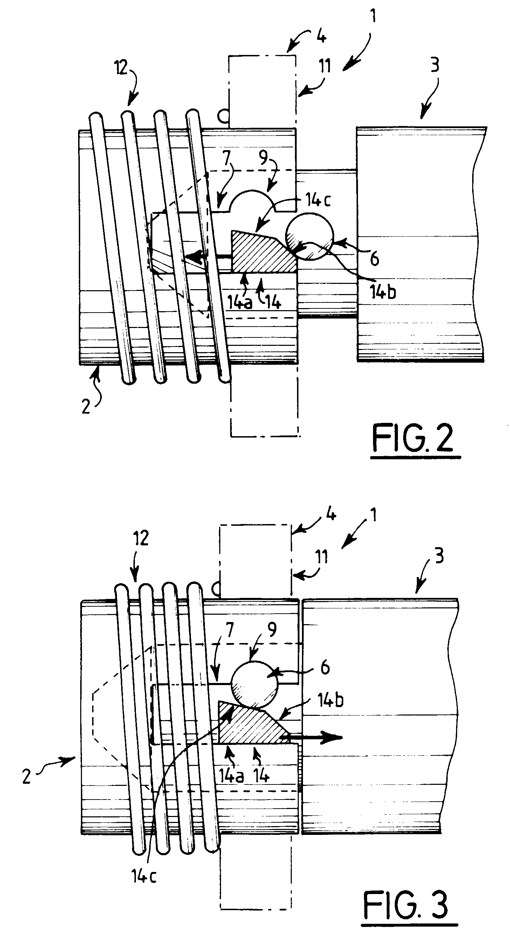

Comme on peut le voir plus clairement sur les figures 2 et 3, chaque partie en saillie radiale des moyens en forme de coin, par exemple 14, de cette bague 11, comprend d'un côté, une première surface d'appui par exemple 14a adaptée pour coopérer avec le bord de la douille délimitant la fente, opposé à celui comportant les moyens de butée par exemple 9 et de l'autre côté, c'est-à-dire en regard des moyens de butée 9, au moins une surface en rampe de guidage et de verrouillage de la partie en saillie latérale correspondante de la queue dans la douille.

Dans l'exemple de réalisation représenté, le côté correspondant des moyens en forme de coin par exemple 14, comporte une première et une seconde surfaces en rampe 14b,14c dans le prolongement l'une dans l'autre, décalées angulairement l'une par rapport à l'autre, la première 14b permettant le déplacement des moyens en forme de coin 14 vers leur seconde position escamotée, lors de l'engagement de la queue dans la douille, par appui de la partie en saillie latérale correspondante de celle-ci sur cette surface, et le guidage de cette partie en saillie latérale en direction des moyens de butée 9 du bord correspondant de la fente, et la seconde 14c permettant de verrouiller cette partie en saillie latérale de la queue en position dans ces moyens de butée de la douille.

On conçoit en effet que lorsque la queue 3 est engagée dans la douille 2, chaque partie en saillie latérale, par exemple 6, de cette queue, vient en appui contre la première surface en rampe par exemple 14b des moyens en forme de coin correspondants par exemple 14, qui s'étendent dans la fente correspondante par exemple 7 de la douille.

Cet engagement de la queue dans la douille provoque alors le recul de ces moyens en forme de coin et donc de la bague 11, à l'encontre de la sollicitation élastique des moyens 12, pour libérer le passage à cette queue.

De plus, la ou chaque partie en saillie latérale 6 de la queue est guidée en direction des moyens de butée correspondants constitués par exemple par le décrochement 9 de la fente de la douille, par la première surface en rampe 14b des moyens en forme de coin correspondants.

Une fois les parties en saillie latérale de la queue dans cette position, les moyens élastiques 12 repoussent la bague et les moyens en forme de coin de sorte que la seconde surface en rampe 14c de ces moyens en forme de coin, vient en appui sur la partie en saillie latérale correspondante par exemple 6 de la queue et sur le bord correspondant de la douille délimitant la fente, pour assurer le verrouillage en position de la queue dans la douille en empêchant la ou chaque partie en saillie latérale de la queue de se dégager de ces moyens de butée de la douille.

Si l'engagement de la queue dans la douille n'est pas suffisant, la bague et les moyens en forme de coin, sous l'action des moyens élastiques, provoquent l'éjection de cette queue de la douille, afin d'éviter toute fausse position de verrouillage de celle-ci dans la douille.

Il va de soi bien entendu que différents modes de réalisation de cette attache peuvent être envisagés.

C'est ainsi par exemple que différents modes de réalisation des moyens de verrouillage, des fentes et des moyens de butée de la douille peuvent être envisagés.

On conçoit alors que l'attache rapide selon l'invention présente un certain nombre d'avantages par rapport aux attaches de l'état de la technique dans la mesure où sa structure est extrêmement simple, fiable et facile à fabriquer.

On notera également qu'une telle attache peut trouver de nombreuses applications notamment dans l'industrie automobile pour raccorder deux organes de direction notamment d'un véhicule automobile comme par exemple un volant de direction à un organe d'une colonne de direction de celui-ci ou autre.

## Revendications

1. Attache rapide de type à baïonnette pour le raccordement de deux organes de direction notamment de véhicule automobile, dont l'un comporte une douille (2) munie d'au moins une fente (7,8) de réception d'une partie en saillie latérale (5,6) d'une queue (3) de l'autre organe, l'attache comportant des moyens (4) de verrouillage en position de la partie en saillie latérale (5,6) de la queue (3) dans la fente (7,8) de la douille (2), caractérisée en ce qu'au moins l'un des bords de la douille (2) délimitant la fente comporte des moyens de butée (9,10) délimitant au moins une position de verrouillage de la partie en saillie latérale et en ce que les moyens de verrouillage (4) comportent des moyens (11,13,14) en forme de coin déplaçables dans la fente, entre une première position de verrouillage, dans laquelle ces moyens en forme de coin (13,14) empêchent la partie en saillie latérale (5,6) de la queue (3) de se dégager des moyens de butée (9,10) de la fente (7,8) de la douille (2) et une seconde position escamotée.

2. Attache selon la revendication 1, caractérisée en ce que la queue (3) comporte au moins deux parties en saillie latérale (5,6) diamétralement opposées, et en ce que la douille (2) comporte au moins deux fentes diamétralement opposées (7,8) correspondantes.

3. Attache selon la revendication 1 ou 2, caractérisée en ce que les moyens de butée du bord correspondant de la douille comportent au moins un décrochement (9,10) de réception de la partie en saillie latérale correspondante.

4. Attache selon l'une quelconque des revendications précédentes, caractérisée en ce que les moyens en forme de coin (11,13,14) sont sollicités dans leur première position de verrouillage par des moyens élastiques (12).

5. Attache selon l'une quelconque des revendications précédentes, caractérisée en ce que les moyens en forme de coin (13,14) comprennent d'un côté, une première surface d'appui (14a) adaptée pour coopérer avec le bord de la douille (2) délimitant la fente (7,8), opposé à celui comportant les moyens de butée (9,10), et de l'autre côté au moins une surface en rampe (14b,14c) de guidage et de verrouillage de la partie en saillie latérale dans les moyens de butée correspondants.

6. Attache selon la revendication 5, caractérisée en ce que l'autre côté correspondant des moyens en forme en coin (13,14) comporte une première et une seconde surfaces en rampe (14b,14c) dans le prolongement l'une de l'autre, décalées angulairement l'une par rapport à l'autre, la première (14b) permettant le déplacement des moyens en forme de coin (13,14) vers leur seconde position escamotée lors de l'engagement de la queue (3) dans la douille (12) et le guidage de la partie en saillie latérale correspondante en direction des moyens de butée et la seconde (14c), le verrouillage de la partie en saillie latérale en position dans les moyens de butée.

7. Attache selon l'une quelconque des revendications précédentes, caractérisée en ce que les moyens en forme de coin se présentent sous la forme d'au moins une partie en saillie radiale (13,14) d'une bague de guidage (11) déplaçable par rapport à la douille.

8. Attache selon la revendication 7, caractérisée en ce que la ou chaque fente (7,8) de la douille (2) est une fente axiale et en ce que la bague de guidage (11) est déplaçable axialement par rapport à cette douille pour permettre un déplacement axial des moyens en forme de coin (13,14) dans la fente correspondante.

9. Attache selon la revendication 8, caractérisée en ce que la bague est disposée autour de la douille et en ce que les parties en saillie radiale (13,14) sont dirigées vers l'intérieur de celle-ci.
